# EUROPEAN PATENT APPLICATION

(11) **EP 2 868 363 A1**
(43) Date of publication of application: **06.05.2015**
(21) Application number: 13190613.3
(22) Date of filing: 29.10.2013
(51) Int. Cl.: B01D 53/00, B01D 53/26

(54) **System and method for treating a gas stream**

(71) Applicant: ALSTOM Technology Ltd, 5400 Baden (CH)
(72) Inventor: Nilsson, Lars, 280 22 Vittsjö (SE); Amann, Jean-Marc Gilbert, 352 59 Växjö (SE)

(57) **Abstract**

The system (1) for treating a gas stream containing CO₂, O₂, water and NOₓ comprises a compressor (2), a first dryer unit (7) downstream of the compressor (2), a unit (9) for removal of NOₓ or NOₓ and CO₂ downstream of the first dryer unit (7), a second dryer unit (15) downstream the unit (9) for removal of NOₓ or NOₓ and CO₂, a unit for final CO₂ removal (17) downstream the second dryer unit (15).

## Description

### TECHNICAL FIELD

The present disclosure relates to a system and a method for treatment of a gas stream. The gas stream contains CO₂, for example in an amount higher than 70%. The gas stream can be generated during the combustion of a fuel in a boiler or furnace for power plant production or for other industrial use or can derive from an industrial process. For example the combustion can be oxy-fuel combustion, i.e. combustion between a fuel and substantially pure oxygen or oxygen enriched air. The system and method aim at obtaining a substantially pure CO₂ stream.

### BACKGROUND

AU 2008 277 536 discloses a system and method for treating a gas stream containing CO₂ and other components, such as NOₓ.

According to AU 2008 277 536 the gas stream is compressed in a plurality of stages, then the compressed gas stream is dehydrated and it is then cooled to condense CO₂.

According to AU 2008 277 536, in order to remove water with very high efficiency, removal of water is achieved by adsorption via a molecular sieve.

Nevertheless, since NOₓ can be troubling for the molecular sieve, AU 2008 277 536 suggests to remove water in two steps, namely a first step using means resistant to NOₓ and able to remove in addition to water also NOₓ, and a second step using a molecular sieve that is able to remove water with very high efficiency.

After the removal of water, the gas stream deprived of water is sent to a condenser, where CO₂ is liquefied.

The inventors have found a way to further improve this process.

In fact, even if at the first step of water removal also NOₓ is removed, this NOₓ removal may not be efficient enough, which means that the gas stream supplied to the molecular sieve for the second water removal step can still contain an amount of NOₓ large enough to impair the molecular sieve.

### SUMMARY

An aspect of the disclosure includes providing a system and a method that are more reliable than those provided in the prior art.

For example, the system and method allow dehydration by adsorption by using a molecular sieve with a reduced risk that NOₓ can impair the molecular sieve.

These and further aspects are attained by providing a system and method in accordance with the accompanying claims.

### BRIEF DESCRIPTION OF THE DRAWINGS

Further characteristics and advantages will be more apparent from the description of a preferred but non-exclusive embodiment of the system and method, illustrated by way of non-limiting example in the accompanying drawings, in which:

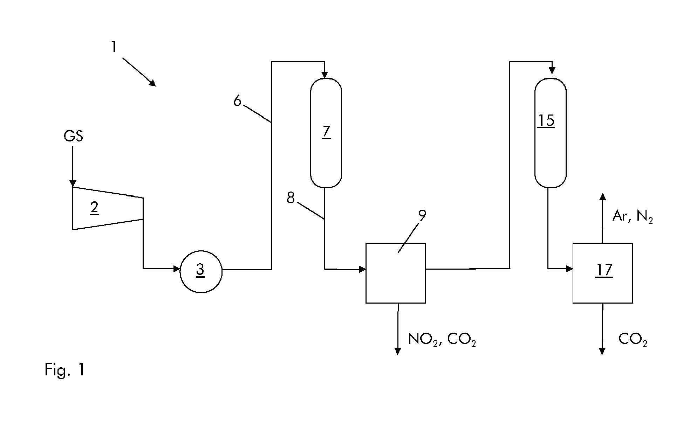

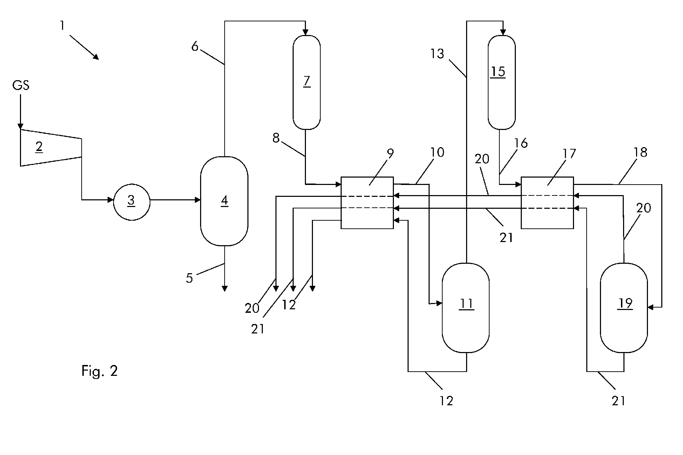

Figures 1 and 2 show schematic views of the system.

### DETAILED DESCRIPTION OF EXEMPLARY EMBODIMENTS

With reference to figure 1, this shows a system 1 for treating a gas stream containing at least CO₂, O₂, water and NOₓ. The system 1 comprises a compressor 2, which can include one or more compressor stages that can be intercooled or not. Downstream of the compressor 2 a cooler 3 is provided (but it is not mandatory) and thus a first dryer unit 7 is provided downstream of the compressor 2; the first dryer unit 7 is a NOₓ tolerant dryer unit, i.e. a dryer unit that is not or it is affected to a limited extent by the presence of NOₓ in the gas stream; such a NOₓ tolerant dryer unit can for example be a silica gel dryer.

A unit 9 for removal of NOₓ or NOₓ and CO₂ is provided downstream of the first dryer unit 7.

The unit 9 for removal of NOₓ or NOₓ and CO₂ can be of different types, for example it can comprise one or more condensers preferably associated to one or more separators; in this case the condensers can be alternated to the separators (i.e. there are provided one condenser, then one separator, then another condenser, then another separator, and so on) or there can be a plurality of condensers and then a plurality of separators, or a combination of these configurations). In addition, the unit 9 for removal of NOₓ or NOₓ and CO₂ can comprise one or more distillation columns, or also other different devices, such as membrane separators and so on. Naturally the unit 9 for removal of NOₓ or NOₓ and CO₂ can also include different arrangements of condensers and/or separators and/or distillation columns and/o membrane separators etc.

Downstream of the unit 9 for removal of NOₓ or NOₓ and CO₂ a second dryer unit 15 is provided and, in addition, a unit for final CO₂ removal 17 is provided downstream the second dryer unit 15. The second dryer unit 15 is a high efficiency dryer unit, i.e. a dryer unit that is able to remove a very high percentage of the water contained in the gas stream treated. For example second dryer unit 15 is a molecular sieve dryer.

The unit for final CO₂ removal 17 can be of the same type as or it can be different from the unit 9 for removal of NOₓ or NOₓ and CO₂. Thus the unit for final CO₂ removal 17 can comprise one or more condensers preferably associated to one or more separators; in this case the condensers can be alternated to the separators (i.e. there are provided one condenser, then one separator, then another condenser, then another separator, and so on) or there can be a plurality of condensers and then a plurality of separators, or a combination of these configurations). In addition, the unit for final CO₂ removal 17 can comprise one or more distillation columns, or also other different devices, such as membrane separators, and so on.

Naturally the unit for final CO₂ removal 17 can also include different arrangements of condensers and/or separators and/or distillation columns and/o membrane separators etc...

The gas stream GS to be treated is first compressed at the compressor 2. NOₓ includes mainly NO and NO₂ (other components defining NOₓ can be HNO₃, N₂O₄, etc. but they are usually contained in a very low amount); NO is converted into NO₂ according to the main reaction

NO + ½ O₂ ↔ NO₂.

At high pressure (for example caused by the compressor 2) the conversion rate of NO into NO₂ is enhanced.

After cooling at the cooler 3, the gas stream is dried at the dryer unit 7; here the NOₓ is not troubling, because the dryer unit is NOₓ tolerant. Then NOₓ or NOₓ and CO₂ are removed from the gas stream at the unit 9; the gas stream is thus forwarded to the dryer unit 15. The residual NOₓ (in particular NO₂) in the stream gas downstream of the unit 9 for removal of NOₓ or NOₓ and CO₂ is low, such that it does not substantially impair the dryer unit 15. The dryer unit 15 can thus be selected according to the desired water removal, with limited risks that NOₓ in the gas stream can damage it.

The gas stream depleted from water and NOₓ is thus supplied to the unit 17 where CO₂ is removed with high efficiency, without the risk or with a limited risk that water contained in the the gas stream can damage it or affect the process.

Figure 2 shows in greater detail an example of a system similar to the system of figure 1.

The gas stream GS contains CO₂ (for example the amount of CO₂ is higher than 70% by volume of the gas stream GS). In addition the gas stream also includes O₂, water and NOₓ. Other components such as Argon or N₂ or other components can be contained in the gas stream GS.

The system 1 comprises a compressor 2 defined by a compressor like for example a multi stage compressor; the multi stage compressor can also be an intercooled compressor.

Downstream the compressor 2, a cooler 3 to remove the heat gained by the gas stream GS during compression can be provided.

Within the compressor 2 NOₓ will tend to form acid. In fact, NOₓ includes mainly NO and NO₂ that react according to the reaction

NO + ½ O₂ ↔ NO₂.

At high pressure (for example caused by the compressor 2) the conversion rate of NO into NO₂ is enhanced; NO₂ reacts with water forming nitric acid (in liquid phase). Formation of nitric acid in liquid phase causes removal of NO₂ from the gas and further conversion of NO into NO₂.

Thus a separator 4 is usually provided (but it is not mandatory) downstream of the compressor 2 (typically downstream of the cooler 3 when this is provided). From the separator 4 a liquid acid stream 5 containing the nitric acid and a compressed gas stream 6 are discharged.

A first dryer unit 7 is provided downstream of the compressor 2. The dryer unit 7 is supplied with the compressed gas 6.

The dryer unit 7 can be of different types (e.g. absorption, adsorption type); advantageously it is of the type tolerant to NOₓ, such that it is able to remove water and/or NOₓ but it is impaired by the residual NOₓ contained in the compressed stream 6 only to a limited extent (namely the NO₂ is directly troubling for the dryer unit and NO is only indirectly troubling according to the reaction NO + ½ O₂ ↔ NO₂). For example the dryer unit 7 is a silica gel dryer.

A gas stream 8 treated in the dryer unit 7 is supplied to the first unit 9 for removal of NOₓ or NOₓ and CO₂ that can for example comprise a first condenser, as explained above other examples of a unit for removal of NOₓ or NOₓ and CO₂ are possible.

The first condenser 9 is provided downstream the dryer unit 7. At the first condenser 9 the stream 8 is cooled to cause condensation of NO₂.

The gas stream 8 contains NOₓ (i.e. NO and NO₂); at the conditions of the first condenser 9, NO₂ condenses whereas NO typically does not condense. Thus NO₂ is removed from the gas stream by condensation and in view of the chemical reaction NO + ½ O₂ ↔ NO₂, NO is converted into NO₂ that in turn condenses; therefore as a whole the process causes NOₓ removal from the gas stream 8.

In addition, at the first condenser 9 also CO₂ condenses. Preferably most of the CO₂ condenses at the first condenser 9.

The first condenser 9 discharges a stream 10.

Preferably, downstream of the first condenser 9 a separator 11 is provided (but the separator 11 is not mandatory). The separator 11 is supplied with the stream 10 and it is used for removing condensed NO₂ and CO₂ from the stream 10. From the separator 11 the liquid stream 12 containing condensed NO₂ and CO₂ and a stream 13 (this is a gas stream) are discharged. The liquid stream 12 is passed through the first condenser 9 for cooling the stream 8 and is then stored or used in any other way.

A second dryer unit 15 is provided downstream of the first condenser 9; preferably the second dryer unit 15 is provided downstream of the separator 11 when this is present. The second dryer unit 15 is supplied with the stream 13 to eliminate the remaining water that was not removed at the first dryer 7 or in separator 11.

The second dryer unit 15 removes water with efficiency higher than the first dryer unit 7, i.e. the second dryer unit 15 is able to remove a very high percentage of the water contained in the gas stream treated in it. The second dryer unit 15 is preferably also able to remove water reaching a lower water content in the gas stream discharged therefrom than the first dryer unit 7.

The second dryer unit 15 is preferably an adsorption dryer; for example the adsorption dryer defining the second dryer unit 15 comprises a molecular sieve dryer.

The second dryer unit 15 discharges a stream 16 (this is a gas stream).

Downstream the second dryer unit 15 the unit for final CO₂ removal 17 is provided; the unit for final CO₂ removal 17 comprises for example second condenser 17 but, as explained above, other example for the unit for final CO₂ removal 17 are possible.

The second condenser 17 is fed with the stream 16 and is used to condense CO₂. The second condenser 17 discharges a stream 18.

Downstream of the second condenser 17 another separator 19 is preferably provided (but it is not mandatory); the separator 19 separates off-gas (such as for example Argon, N₂, CO₂) contained in the stream 18 from the liquid CO₂.

The off-gas is passed through the second condenser 17 and first condenser 9 via line 20 to cool the streams 16 and 8 and is then discharged or vented to the atmosphere. This improves the thermal efficiency.

The liquid CO₂ is also passed through the second condenser 17 and first condenser 9 via line 21 to cool the streams 16 and 8 and is then stored or used in any other way.

At the first condenser 9 the gas stream 8 is cooled to a first temperature and at the second condenser 17 the gas stream 16 is cooled to a second temperature. The second temperature is lower than the first temperature.

In addition, the first temperature allows NO₂ condensation and CO₂ condensation at the first condenser 9 without risk of ice formation, and the second temperature allows CO₂ condensation (liquefaction) at the second condenser 17.

For example, the first temperature is between -15 and -35 °C and the final temperature is lower than -35 °C and preferably between -45 and -55 °C.; CO₂ condensation (after the condensation at the first condenser 9 and second condenser 17) typically removes at least 90% of the CO₂ contained in the inlet gas GS. These temperature levels prevent ice formation that may clog equipment and pipes downstream of dryer unit 7.

During operation, the compressor 2 is supplied with the gas stream GS deriving for example from the combustion of fuel in a boiler or from an industrial process.

The stream GS contains CO₂ and in addition also at least O₂, water and NOₓ. Moreover additional components can be included in the gas stream GS such as Argon, N₂, etc.

The gas stream GS is compressed up to 2-50 bar at the compressor 2 and it is then cooled at the cooler 3. During compression NO is converted into NO₂ and NO₂ reacts with water in the gas stream GS forming liquid nitric acid. The compressed stream is thus supplied to the separator 4, where the liquid acid stream 5 containing the nitric acid is removed. At the separator 4 up to 30-60% of the NOₓ contained in the gas GS is removed (according to the operating conditions, such as pressure).

The gas stream 6 is discharged from the separator 4 and is supplied to the first dryer unit 7.

At the first dryer unit 7 water and NOₓ are removed. The stream 8 discharged from the first dryer unit 7 and supplied to the first condenser 9 contains a limited amount of water and NOₓ.

At the first condenser 9, the stream 8 is cooled such that NO₂ condenses and NO is converted into NO₂; in addition also CO₂ starts to condense. The stream 10 discharged from the first condenser 9 is thus supplied to the separator 11 where the liquid stream 12 containing the condensed NOₓ or NOₓ and CO₂, is removed. The stream 13 (this is a gas stream) is supplied from the separator 11 to the second dryer unit 15.

The stream 13 is preferably practically free of NO₂ because, during condensation at the first condenser, NO₂ is removed with very high efficiency. For example the stream 13 can be practically completely free of NO₂, but small amounts of NO can still be present in the stream 13, but NO in the stream 13 is not directly troubling. Therefore the second dryer unit 15 can be chosen according to the dehydration needs, without risk or with a limited risk that possible residual NO₂ in the gas stream can damage it.

At the second dryer unit 15, water is removed with high efficiency, as required for the treatments downstream of it. The stream 16 discharged from the second dryer unit 15 is supplied to the second condenser 17; at the second condenser 17 the stream 16 is cooled such that the CO₂ is condensed.

The stream 18 discharged from the second condenser 17 is thus supplied to the separator 19 where liquid CO₂ (stream 21) is recovered and stored or used in any other way. The remaining gas (for example Argon and/or N₂ and/or CO₂) are also recovered and vented or used in any other way (stream 20).

The present disclosure also refers to a method for treating a gas stream containing at least CO₂, O₂, water and NOₓ.

The method comprises:
compressing the gas stream GS,
a first step of removing water from the compressed gas stream GS after compressing the gas stream GS,
a step of removing NOₓ or NOₓ and CO₂, contained in the compressed gas stream,
a second step of removing water, this step is carried out after the first step of removing NOₓ or NOₓ and CO₂,
a step of final CO₂ removal after the second step of removing water.

The step of removing NOₓ or NOₓ and CO₂ preferably comprises condensing NOₓ or NOₓ and CO₂, and condensing NOₓ or NOₓ and CO₂, comprises cooling the gas stream to a temperature that allows NOₓ or NOₓ and CO₂ condensation but prevents water from freezing.

In addition, the step of final CO₂ removal preferably comprises condensing CO₂.

Preferably during the first step of condensing NOₓ or NOₓ and CO₂ the gas stream 8 is cooled to a first temperature, and during the second step of condensing, the gas stream 16 is cooled to a final temperature. The final temperature is lower than the first temperature. For example the first temperature is between -15 and -35 °C and the final temperature is lower than -35 °C and preferably between -45 and -55 °C.

In addition, the first step of removing water preferably comprises passing the gas stream 6 through a NOₓ tolerant dryer unit such as a silica gel dryer and the second step of removing water comprises passing the gas stream through a dryer unit having higher efficiency for water removal than the first dryer unit like an adsorption dryer. Passing the gas stream through an adsorption dryer unit preferably comprises passing the gas stream through a molecular sieve dryer.

Naturally the features described may be independently provided from one another.

In practice the materials used and the dimensions can be chosen at will according to requirements and to the state of the art.

### REFERENCE NUMBERS

- 1: system
- 2: compressor
- 3: cooler
- 4: separator
- 5: acid stream
- 6: gas stream
- 7: first dryer unit
- 8: gas stream
- 9: unit for removal of NOₓ or NOₓ and CO₂
- 11: separator
- 12: liquid stream
- 13: stream
- 15: second dryer unit
- 16: stream
- 17: unit for final CO₂ removal
- 18: stream
- 19: separator
- 20: stream
- 21: stream
- GS: gas stream

## Claims

1. A system (1) for treating a gas stream containing at least CO₂, O₂, water and NOₓ, the system (1) comprising:
a compressor (2),
a first dryer unit (7) downstream of the compressor (2),
a unit (9) for removal of NOₓ or NOₓ and CO₂ downstream of the first dryer unit (7),
**characterised in** comprising
a second dryer unit (15) downstream of the unit (9) for removal of NOₓ or NOₓ and CO₂,
a unit for final CO₂ removal (17) downstream of the second dryer unit (15).

2. The system (1) of claim 1, **characterised in that** the unit (9) for removal of NOₓ or NOₓ and CO₂ comprises a first condenser.

3. The system (1) of claim 1, **characterised in that** the unit for final CO₂ removal (17) comprises a second condenser.

4. The system of claim 2 and 3, **characterised in that** the first condenser is arranged to cool the gas stream to a first temperature and the second condenser is arranged to cool the gas stream to a final temperature, wherein the final temperature is lower than the first temperature.

5. The system (1) of claim 1, **characterised in that** the first dryer unit (7) is a NOₓ tolerant dryer unit.

6. The system (1) of claim 1, **characterised in that** the second dryer unit (15) has higher efficiency for water removal than the first dryer unit (7).

7. The system (1) of claim 6, **characterised in that** the second dryer unit (15) comprises an adsorption dryer.

8. The system (1) of claim 7, **characterised in that** the adsorption dryer comprises a molecular sieve dryer.

9. A method for treating a gas stream containing at least CO₂, O₂, water and NOₓ, the method comprising:
compressing the gas stream,
a first step of removing water after compressing the gas stream,
a step of removing NOₓ or NOₓ and CO₂,
**characterised in** comprising
a second step of removing water after the first step of removing NOₓ or NOₓ and CO₂,
a step of final CO₂ removal after the second step of removing water.

10. The method of claim 9, **characterised in that** the step of removing NOₓ or NOₓ and CO₂ comprises condensing NOₓ or NOₓ and CO₂.

11. The method of claim 10, **characterised in that** condensing NOₓ or NOₓ and CO₂ comprises cooling the gas stream to a temperature that allows NOₓ or NOₓ and CO₂ to condense but prevents water from freezing.

12. The method of claim 9, **characterised in that** the step of final CO₂ removal comprises condensing CO₂.

13. The method of claim 10 and 12, **characterised in that** during the step of condensing NOₓ or NOₓ and CO₂ the gas stream is cooled to a first temperature, and during the final step of condensing CO₂ the gas stream is cooled to a final temperature, wherein the final temperature is lower than the first temperature.

14. The method of claim 9, **characterised in that** the first step of removing water comprises passing the gas stream through a NOₓ tolerant dryer unit.

15. The method of claim 9, **characterised in that** the second step of removing water comprises passing the gas stream through a second dryer unit having higher efficiency for water removal than the first dryer unit.
